# EUROPEAN PATENT SPECIFICATION

(11) **EP 1 646 285 B1**
(45) Date of publication and mention of the grant of the patent: **23.11.2011**
(21) Application number: 04749162.6
(22) Date of filing: 12.07.2004
(51) Int. Cl.: A21B 1/48, A21B 2/00, A47J 37/04

(54) **A FOODSTUFF-PREPARING DEVICE AND METHOD**
GERÄT UND VERFAHREN ZUR HERSTELLUNG VON NAHRUNGSMITTELN
DISPOSITIF ET PROCEDE SERVANT A PREPARER UN PRODUIT ALIMENTAIRE

(30) Priority: 18.07.2003 SE 0302102
(43) Date of publication of application: 19.04.2006
(73) Proprietor: Inter IKEA Systems B.V., 2616 LN Delft (NL)
(72) Inventor: JAVENIUS, Ake, B-1410 Waterloo (BE)
(74) Representative: Petri, Stellan
(86) International application number: PCT/SE2004/001126
(87) International publication number: WO 2005/006866

(56) References cited:
- US-A- 4 565 704
- US-A- 4 987 828
- US-A- 5 054 384
- US-A- 5 113 753
- US-A- 6 147 336

## Description

### Technical Field

The present invention relates to a device and a method for making omelets, the device having a conveyor for transferring plates linearly through the device from a position for supplying each plate with omelet batter to a position for removal of a finished omelet from the device.

### Background of the Invention

The hen egg is a universally available foodstuff, and an omelet is a nourishing and popular dish all over the world. In certain instances it may be desired to provide the omelet with a filling of meat, pork, shrimp, mushroom, vegetables or the like, either in a stew or *au naturel.*

It may be desirable in for example a restaurant in a big store to serve omelets in large quantities at short times but yet custom-made according to the order of each individual customer.

Omelet making devices for fulfilling at least certain of the above needs are known.

There are two main types of known omelet making devices, namely on one hand rotary or carousel devices and on the other hand linear devices, i e devices with an endless conveyor belt for transferring the omelet forward during its manufacture. The former rotary type has certain drawbacks with regard to versatility, handling and space requirements, and the present invention is concerned with the latter type.

A typical example of an omelet preparing device or machine of the latter type, forming the state of the art for the present invention, is shown in US-A-3 782 269. In this rather complicated machine, where the omelets are folded around fillings or inclusions, the heating is conventionally attained by means of burners from below and electrical heating coils from above.

A device for making omlets according to the closest prior art is represented by document US-A-4 987 828.

In modern days, time is of essence. In a restaurant with a great flow of customers it is important to serve the ordered custom-made omelet as quickly as possible (in most cases with a filling or topping of the customer's choice). With a shorter serving time (without in any way sacrificing the appearance or quality of the served omelets) an improved utilization of the restaurant space and other facilities will be obtained.

The main object of the invention is accordingly to coagulate or cook an omelet in the shortest possible time without impairing the visual or gastronomic quality of the served omelet and with full controllability.

### The Invention

The device for making omelets according to the invention is defined by the features of claim 1.

By the use of these heating means with suitable control means it is possible to reach a target time of 20 seconds or less.

In order to obtain a neat and suitable construction, which easily can be adopted to different needs, each separate treatment station of the device can comprise a module in a modular system.

It is important to obtain the desirable controllability for the device, and for that reason means are provided for driving the conveyor stepwise and giving a certain stop-time for each plate in each treatment station.

In the simplest form, designed for making plain omelets without any filling, the device contains the following treatment stations (each with an induction heater) in order: an omelet batter dispenser and an infrared heater, before a station for removal of a finished omelet.

In most cases, the customer wants an omelet with filling, typically a stew, for example stew of mushroom, asparagus or shrimp, or a dry filling, such as ham, cheese or the like.

For such purposes stations with filling dispensers can be arranged before and/or after the station with infrared heater, because in certain cases it may be desirable to dispense the filling in the partly cooked omelet so as to integrate it therein, whereas in other cases it is better to finish the omelet and then to dispense the filling on top of it.

Induction heaters for cooperation from below with the magnetic plate can be provided in desired treatment stations. By an operating induction heater in a certain treatment station the omelet batter on the plate will be heated. If an induction heater is provided in every treatment station, the different heaters can be controlled so as to provide the desired cook result.

An even more effective device can be accomplished by arranging another conveyor or even more conveyors in parallel with the first conveyor. Such added conveyors shall preferably have separate drive means.

In a practical set-up different parameters with regard to omelet thickness, cooking degree, browning, and filling (or even more than one filling) can be determined by an operator or even by the customer himself by pressing relevant buttons for the device.

In the method according to the invention the objects of the invention are obtained by the combination of primary coagulation of the omelet batter by separately controllable induction heaters from below in at least two treatment stations and browning of the top surface of the omelet by infrared heating from above.

### The Drawings

The invention will be described in further detail below under reference to the accompanying drawings, in which
Fig 1 is a side-view of a first embodiment of a device according to the invention,
Fig 2 is a plan view of the same device,
Fig 3 is a side view of a second embodiment of a device according to the invention, and
Fig 4 is a plan view of the device of Fig 3.

### Detailed Description of Preferred Embodiments

An omelet-making device according to the invention may have a conventional supporting structure or stand 1, possibly provided with lockable wheels 2 for enabling its easy transfer on a floor.

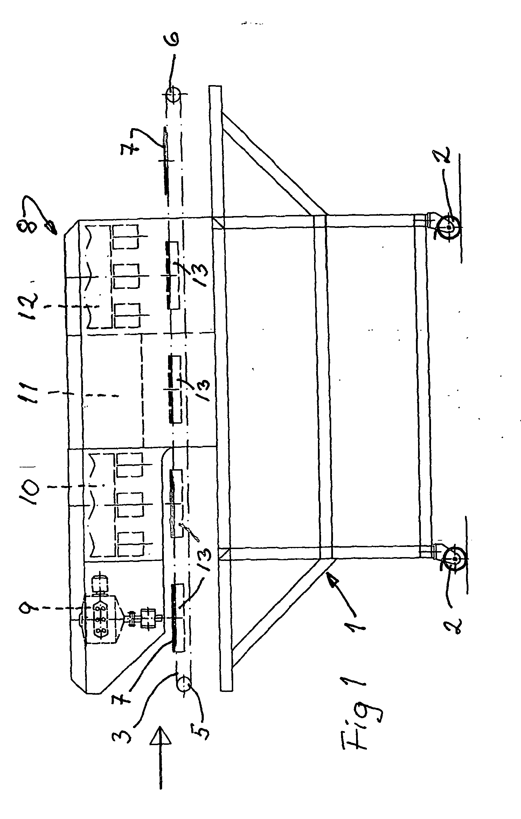

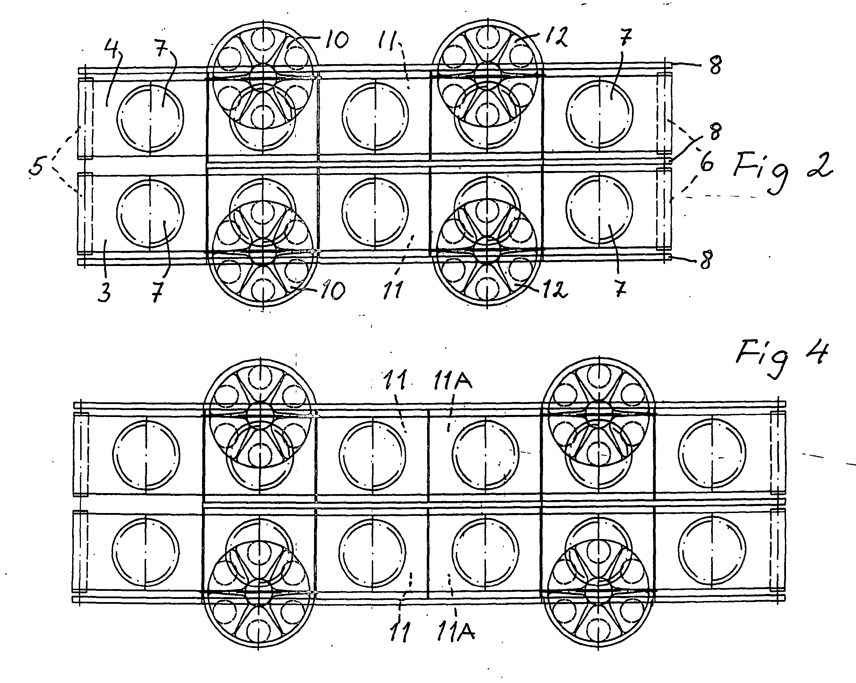

Two endless conveyors 3 and 4 (see Fig 2) are supported in parallel on the stand 1. Each conveyor has two end pulleys 5 (to the left in the drawings) and 6 (to the right). Drive means (not shown), such as an electric motor, may be associated with the right pulley 6 for driving the upper part of the endless conveyor 3 or 4 in the direction of the arrow in Fig 1. The two conveyors 3 and 4 are preferably driven independently of each other and in a stepwise sequence as will be more apparent below.

Each conveyor 3 or 4 is preferably made of a non-magnetic material, such as Teflon®. It may comprise links with carriers or a belt-like structure. It is provided with fixed positions equidistantly spaced along the conveyor 3 or 4 for removable or loose plates 7. Each plate having a certain depth is made of a magnetic material and may have a diameter of say 230 mm and may be relatively thin. Each plate 7 may have a coating of Teflon® or a similar non-sticky material.

A superstructure 8 with open ends is supported by the stand 1 over each conveyor 3 and 4. For hygenic reasons, the superstructure 8 may for example be made of stainless steel plate. As will appear more clearly below, the superstructure 8 is preferably modular in its construction.

The different shown modules or treatment stations will first be very briefly described and thereafter slightly more detailed.

In the set-up shown in Fig 1, the different stations contain in order an omelet batter dispenser 9, a first filling dispenser 10, an infrared or IR heater 11, and a second filling dispenser 12.

In all the stations there may be an induction heater 13 arranged immediately under the upper part of the conveyor 3 or 4 and thus under each plate 7.

The process of making an omelet starts by pouring omelet batter from its dispenser 9 onto a plate 7 placed thereunder in the first station of the device. The omelet batter dispenser 9 may be a cooled container (with a volume of say 5 litres) for omelet batter (made on site or bought ready-made on the market) and may have electrically controlled dispensing means for dispensing the desired amount of omelet batter on the plate 7.

Automated means for placing the plate 7 on the conveyor 3 or 4 may be used, and the plate 7 may possibly initially be provided with a thin oil coating. As an alternative, the omelet batter may contain a certain amount of oil.

If an induction heater 13 under the omelett batter dispenser 9 is operated, a fast initial stiffening or coagulation of the batter may be obtained for its easier continued handling in the device.

In a second station filling may be provided onto or perhaps rather into the omelet batter on the temporarily stopped plate 7 from the first filling dispenser 10. Each such filling dispenser is shown as being of the revolver-type, so that it may contain for example six different fillings and may be turned around its vertical axis for bringing the desired filling in position for dispensing in the desired quantity on the omelet-battered plate 7 thereunder.

Heating may be provided by the induction heater 13 also at this station for coagulation of the batter and browning of its lower surface in contact with the plate 7.

In the third station an appetizing browning of the upper surface of the omelet and/or filling may be provided by the IR heater 11. This IR heater may be of the type that provides-its heat almost instantly. Its maximum power may for example be some 1 kW, and its power may have to be controlled in order to obtain the desired browning.

In the fourth station there is a second filling dispenser 12 for such fillings that are suitable for filling after the omelet in itself has been finished. It may be valuable to provide heating for the second filling dispenser, as the filling therefrom is otherwise not warmed.

Induction heaters 13 may be provided both in the third and the fourth stations.

The plate 7 now moves to its rightmost position outside the superstructure 8, and the omelet thereon is transferred to a customer plate for consumption.

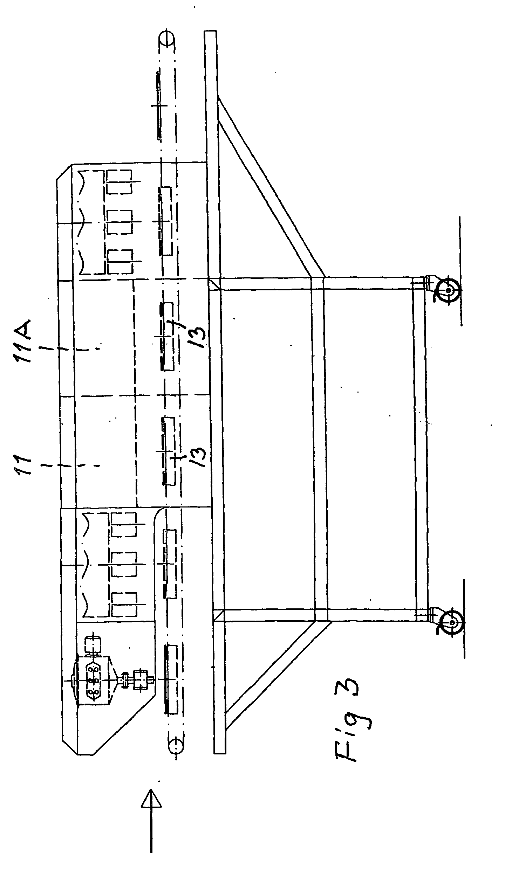

The modular construction of the device according to the invention is illustrated by the second embodiment of Figs 3 and 4. These figures are only provided with reference numerals to the extent necessary for a proper understanding of the difference in relation to the first embodiment of Figs 1 and 2.

In the second embodiment a second IR-heater station 11A is added to the first IR-heater station 11, if the necessary browning can not be obtained in a single one. An induction heater 13 may be provided also in this second station.

The power of each induction heater 13 may be set according to the requirements, and the different heaters may have or may be controlled to have different output powers in order to obtain the desired result in the desired time-span. It may be a realistic aim to obtain a consumable omelet on a separate plate in a time-span of say 20 seconds from the time when a plate 7 is placed in position under the omelet batter dispenser 9.

The device has been shown and described with two parallel conveyors 3 and 4. However, a single conveyor may of course be used. It is to be repeated, though, that when the device contains two parallel conveyors 3 and 4, these conveyors may be run completely separate from each other and may even contain different stations and have different operational parameters for obtaining different end results.

Throughout this description reference has been made to omelet making. However, similar dishes may equally well be prepared in a device and by a method according to the invention. Further, modifications are possible within the scope of the appended claims.

## Claims

1. A device for making omelets, the device having plates (7) being of magnetic material, at least two treatment stations and a conveyor (3, 4) for transferring said plates (7) linearly through the device from a position for supplying each plate with omelet batter to a position for removal of a finished omelet from the device,
at least two separately controllable induction heaters (13) positioned under the conveyor (3, 4) in said at least two treatment stations, and **characterized in that**
at least one infrared heater (11) is positioned above the conveyor.

2. A device according to claim 1, wherein each separate treatment station of the device comprises a module in a modular system.

3. A device according to claim 1, wherein means are provided for driving the conveyor (3, 4) stepwise and giving a certain stop-time for each plate (7) in each treatment station.

4. A device according to claim 1, wherein the device contains the following treatment stations in order: an omelet batter dispenser (9) and one of said at least one infrared heaters (11), before a station for removal of a finished omelet.

5. A device according to claim 4, wherein a station with a first filling dispener (10) is provided between the omelet batter dispenser (9) and the infrared heater (11).

6. A device according to claim 4 or 5, wherein a station with a second filling dispenser (12) is provided between the infrared heater (11) and the station for removal.

7. A device according to any of claims 4-6, wherein a station with a second infrared heater (11A) is provided after the first infrared heater (11).

8. A device according to any of claims 4-7, wherein an induction heater (13) is provided in any treatment station (9-12).

9. A device according to claim 1, wherein a second conveyor (4) is arranged in parallel with the first conveyor (3).

10. A device according to claim 9, wherein the conveyors (3, 4) have separate drive means.

11. A device according to claim 5 or 6, wherein the filling dispenser (10, 12) contains several fillings in a revolver-type construction having a vertical turning axis.

12. A device according to claim 1, wherein the conveyor (3, 4) is made of a non-magnetic material, such as Teflon®.

13. A method for making omelets in a device, in which plates (7) are transferred linearly through the device according to claim 1-12 from a position for supplying each plate with omelet batter to a position for removal of a finished omelet from the device, **characterized by** the combination of primary coagulation of the omelet batter by separately controllable induction heaters from below in at least two treatment stations, and browning of the top surface of the omelet by infrared heating from above.

## Patentansprüche

1. Eine Vorrichtung zum Herstellen von Eierkuchen, mit Platten (7) aus einem magnetischen Material, wenigstens zwei Behandlungsstationen und einem Förderer (3, 4) zum Übergeben der Platten (7) linear durch die Vorrichtung von einer Position zum Zuführen jeder mit Eierkuchenteig versehenen Platte in eine Position zum Entnehmen des fertig gestellten Eierkuchen aus der Vorrichtung,
wenigstens zwei separat steuerbare Induktionsheizgeräte (13), die unter dem Förderer (3, 4) in den wenigstens zwei Behandlungsstationen positioniert sind, und **dadurch gekennzeichnet, dass**
wenigstens ein Infrarotheizgerät (11) oberhalb des Förderers positioniert ist.

2. Eine Vorrichtung nach Anspruch 1, wobei jede gesonderte Behandlungsstation der Vorrichtung ein Modul in einem modularen System aufweist.

3. Eine Vorrichtung nach Anspruch 1, wobei Mittel zum schrittweisen Antreiben des Förderers (3, 4) und zum Erlauben einer bestimmten Haltezeit für jede Platte (7) in jeder Behandlungsstation vorgesehen sind.

4. Eine Vorrichtung nach Anspruch 1, wobei das Gerät die folgenden Behandlungsstationen in folgender Reihenfolge beinhaltet: einen Eierkuchenteigdispenser (9) und einen der wenigstens einen Infrarotheizgeräte (11) vor einer Station zum Entnehemen eines fertig gestellten Eierkuchens.

5. Eine Vorrichtung nach Anspruch 4, wobei eine Station mit einem ersten Füllungsdispenser (10) zwischen dem Eierkuchenteigdispenser (9) und dem Infrarotheizgerät (11) angeordnet ist.

6. Eine Vorrichtung nach Anspruch 4 oder 5, wobei eine Station mit einem zweiten Füllungsdispenser (12) zwischen dem Infrarotheizgerät (11) und der Entnahmestation vorgesehen ist.

7. Eine Vorrichtung nach einem der Ansprüche 4 bis 6, wobei eine Station mit einem zweiten Infrarotheizgerät (11A) hinter dem ersten Infrarotheizgerät (11) angeordnet ist.

8. Eine Vorrichtung nach einem der Ansprüche 4 bis 7, wobei ein Induktionsheizgerät (13) in jeder der Behandlungsstationen (9-12) vorgesehen ist.

9. Eine Vorrichtung nach Anspruch 1, wobei ein zweiter Förderer (4) parallel zu dem ersten Förderer (3) angeordnet ist.

10. Eine Vorrichtung nach Anspruch 9, wobei die Förderbänder (3, 4) separate Antriebsmittel haben.

11. Ein Vorrichtung nach Anspruch 5 oder 6, wobei die Füllungsdispenser (10, 12) verschiedene Füllungen in einer revolverartigen Konstruktion mit einer vertikalen Drehachse haben.

12. Eine Vorrichtung nach Anspruch 1, wobei der Förderer (3, 4) aus einem nichtmagnetischen Material wie etwa Teflon® gefertigt ist.

13. Ein Verfahren zum Herstellen von Eierkuchen in einer Vorrichtung, in der Platten (7) linear durch die Vorrichtung geführt werden, nach Anspruch 1 - 12, von einer Position zum Zuführen jeder Platte mit Eierkuchenteig zu einer Station zum Entnehmen des fertigen Eierkuchens aus der Vorrichtung, **gekennzeichnet durch** die Position von primärer Koagulation des Eierkuchenteigs **durch** gesondert steuerbare Induktionsheizgeräte von unterhalb in wenigstens zwei Behandlungsstationen und Bräunen der Oberfläche des Eierkuchen **durch** Infrarothitze von oben.

## Revendications

1. Dispositif pour confectionner des omelettes, le dispositif comprenant des plaques (7) composées d'un matériau magnétique, au moins deux postes de traitement et un convoyeur (3, 4), pour transférer lesdites plaques (7) de manière linéaire à travers le dispositif, d'une position pour alimenter chaque plaque en pâte à omelette, à une position pour retirer une omelette achevée du dispositif,
au moins deux éléments chauffants à induction (13), susceptibles d'être commandés séparément, positionnés sous le convoyeur (3, 4), dans lesdites au moins deux stations de traitement,
et **caractérisé en ce qu'**au moins un élément chauffant aux infra-rouges (11) est positionné au-dessus du convoyeur.

2. Dispositif selon la revendication 1, dans lequel chaque poste de traitement séparé du dispositif comprend un module, dans un système modulaire.

3. Dispositif selon la revendication 1, dans lequel des moyens sont prévus, pour entraîner le convoyeur (3, 4) suivant un mouvement pas à pas et en fournissant un certain temps d'arrêt pour chaque plaque (7) dans chaque poste de traitement.

4. Dispositif selon la revendication 1, dans lequel le dispositif contient, dans l'ordre, les postes de traitement suivants :
un distributeur de pâte à omelette (9), et l'un desdits au moins un élément chauffant aux infra-rouges (11), avant un poste pour l'enlèvement d'une omelette achevée.

5. Dispositif selon la revendication 4, dans lequel un poste muni d'un premier distributeur de remplissage (10) est prévu entre le distributeur de pâte à omelette (9) et l'élément chauffant aux infra-rouges (11).

6. Dispositif selon la revendication 4 ou 5, dans lequel un poste muni d'un deuxième distributeur de remplissage (12) est prévu entre l'élément chauffant aux infra-rouges (11) et le poste d'enlèvement.

7. Dispositif selon l'une quelconque des revendications 4 à 6, dans lequel un poste muni d'un deuxième élément chauffant aux infra-rouges (11A) est prévu après le premier élément chauffant aux infra-rouges (11).

8. Dispositif selon l'une quelconque des revendications 4 à 7, dans lequel un élément chauffant à induction (13) est prévu dans tout poste de traitement (9 à 12).

9. Dispositif selon la revendication 1, dans lequel un deuxième convoyeur (4) est agencé en parallèle avec le premier convoyeur (3).

10. Dispositif selon la revendication 9, dans lequel les convoyeurs (3, 4) ont des moyens d'entraînement séparés.

11. Dispositif selon la revendication 5 ou 6, dans lequel le distributeur de remplissage (10, 12) contient plusieurs charges de remplissage dans une construction de type carrousel présentant un axe de rotation vertical.

12. Dispositif selon la revendication 1, dans lequel le convoyeur (3, 4) est composé de matériau non magnétique, tel que du Teflon®.

13. Procédé pour confectionner des omelettes, dans lequel des plaques (7) sont transférées linéairement à travers le dispositif selon les revendications 1 à 12, d'une position pour alimenter chaque plaque en pâte à omelette, à une position pour retirer une omelette achevée du dispositif, **caractérisé par** la combinaison d'une coagulation primaire de la pâte à omelette, par des éléments chauffants à induction, susceptibles d'être commandés séparément, par le dessous, en au moins deux postes de traitement, et le brunissage de la surface supérieure de l'omelette par chauffage aux infra-rouges, par le dessus.
